# EUROPEAN PATENT APPLICATION

(11) **EP 1 231 762 A1**
(43) Date of publication of application: **14.08.2002**
(21) Application number: 01307016.4
(22) Date of filing: 17.08.2001
(51) Int. Cl.: H04M 1/57

(54) **Automated activation of a speakerphone to provide caller id and other information**

(30) Priority: 09.02.2001 US 779952
(71) Applicant: Avaya, Inc., Basking Ridge, NJ 07920 (US)
(72) Inventor: Michaelis, Paul Roller, Louisville, Colorado 80027 (US); Soltes, John W., Ocean Township, New Jersey 07712 (US)
(74) Representative: Williams, David John

(57) **Abstract**

A telecommunications switch (100) uses the speakerphone (104) of a user terminal (102) to announce display information, such as caller ID and other information. For example, in response to an incoming call, the switch checks (202) translations (123) to determine if announcing of display information is activated for the destination. If not, the switch displays (204) the caller ID on the display (103) of the destination terminal; if so, the switch activates (206) the destination terminal's speakerphone, converts (208) the caller ID to speech, and plays out (210) the caller ID through the speakerphone. Upon receipt (212) of a signal (e.g., off-hook) from the terminal, the switch ceases playing (214) out the caller ID, deactivates (216) the speakerphone, and (depending on the signal) connects (218) the call to the terminal. To effect a public announcement, the switch may activate a plurality of speakerphones and announce the same information through them simultaneously.

## Description

### Technical Field

This invention relates to telecommunications systems.

### Background of the Invention

Caller ID devices display or announce the calling telephone numbers of incoming calls. Typically they connect to the telephone line in the same manner as an answering machine, i.e., the "input" side of the device connects to an RJ-11 wall telephony jack and the telephone connects to the "output" side of the device. These devices are intended for residential telephone applications. They are not compatible with the digital communications protocols that most business communications systems use. Many business communications systems use telephones that include alphanumeric displays that can display caller ID information, and therefore do not need separate caller ID display devices. But if there is a need to make caller identification and other communications functions available to users who cannot see displays, the display telephones are clearly inadequate. Although caller ID voicing devices akin to the residential ones could easily be built for use with digital business communications systems, this would be an unduly expensive solution, and would require different devices to be built for each different protocol.

### Summary of the Invention

This invention is directed to solving these and other problems and disadvantages of the prior art. The invention takes advantage of the ability of a telecommunications switch to activate and deactivate subscribers' speakerphones. Illustratively, when the switch receives a communication for a subscriber, it activates that subscriber's speakerphone and plays out the caller ID information through the speakerphone, while preferably connecting the incoming call to the subscriber's telephone. The switch may or may not ring the subscriber's telephone at the same time. The switch preferably continues to play out the caller ID information through the speakerphone until the subscriber takes his or her telephone off-hook or otherwise picks up, redirects, or terminates the call. Further illustratively, the switch is not limited to playing out caller ID information through the speakerphone, but rather may play out any desired information therethrough. For example, the switch may use speakerphones as a public address system, by simultaneously playing the same information through the speakerphones of a plurality of subscribers.

According to one aspect of the invention, a method of using a speakerphone involves the following functions. In response to receiving a communication from a source (e.g., a caller) for a destination that has a user telecommunications terminal (e.g., a telephone) and a speakerphone, a communications switch activates the speakerphone and announces the identity of the source through the activated speakerphone. Illustratively, the switch continues to announce the identity of the source through the speakerphone until it receives a signal from the user telecommunications terminal, whereupon it ceases the announcing, deactivates the speakerphone, and (depending on the received signal) connects the communication to the user telecommunications terminal.

According to another aspect of the invention, a method of using a speakerphone involves the following functions. A communications switch determines whether announcing of display information (e.g., caller ID) is activated for a destination that has a user telecommunications display terminal and a speakerphone. If the announcing is not activated, the communications switch causes the display information to be displayed on the display terminal. If the announcing is activated, the communications switch activates the speakerphone and announces the display information through the activated speakerphone. Illustratively, the switch activates not just one speakerphone but rather the speakerphones of a plurality of destinations and announces the display information simultaneously through the plurality of activated speakerphones, thereby effectively creating a public announcement system.

The invention effectively provides caller ID and other information to visually-impaired telecommunications users in a business communications environment. The invention has the advantage of relying on existing equipment and capabilities for its implementation. Therefore, it is easy and inexpensive to implement, requiring only addition of software to existing equipment. Of course, in systems that do not already include or have access to a text-to-speech conversion facility, such a facility must also be added.

While the invention has been characterized in terms of method, it also encompasses apparatus that performs the method. The apparatus preferably includes an effector―any entity that effects the corresponding step, unlike a means―for each step. The invention further encompasses any computer-readable medium containing instructions which, when executed in a computer, cause the computer to perform the method steps.

These and other features and advantages of the present invention will become more apparent from the following description of an illustrative embodiment of the invention considered together with the drawing.

### Brief Description of the Drawing

FIG. 1 is a block diagram of a telecommunications system that includes an illustrative embodiment of the invention; and
FIG. 2 is a functional flow diagram of a speakerphone activation program of the system of FIG. 1.

### Detailed Description

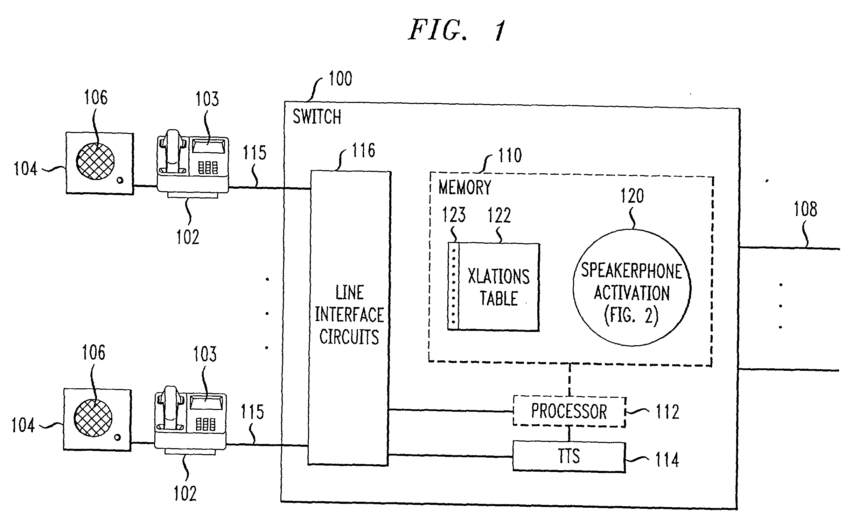

FIG. 1 shows an illustrative telecommunications system comprising a plurality of telephones 102 interconnected with each other and with trunks 108 leading to the outside world by a switch 100. At least some telephones 102 are conventionally equipped with speakerphones 104, each one of which includes a speaker 106 and a microphone. Also, at least some telephones 102 preferably include a display 103 for displaying alphanumeric information. Telephones 102, including speakerphones 104, are connected via telephone lines 115 to line interface circuits 116 of switch 100. Telephones 102 and line interface circuits 116 communicate with each other across lines 115 via a predetermined communications protocol, as is conventional. Switch 100 is a stored-program-controlled machine, such as a private branch exchange (PBX). It includes at least one memory 110 for storing control programs and data, and a processor 112 connected to memory 110 for executing the control programs and using the data. Processor 112 controls operation of line interface circuits 116. As described so far, system of FIG. 1 is conventional. Switch 100 may also conventionally include a text-to-speech facility (TTS) 114 connected to line interface circuits 116 and operating under control of processor 112.

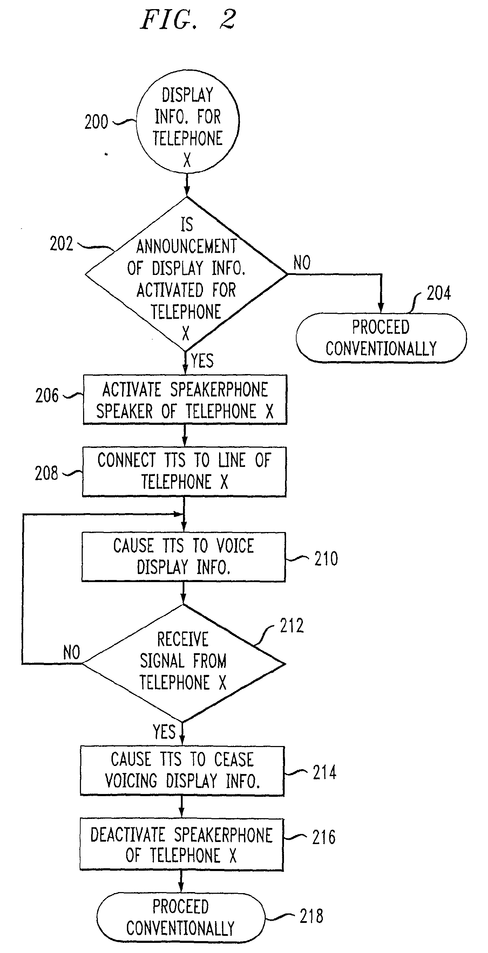

According to the invention, in addition to conventional terminal translation data, a translations (XLATIONS) table 122 in memory 110 includes an indication 123 for each speakerphone 104-equipped telephone 102 that indicates whether caller ID and other information is to be conventionally displayed on display 103 of that telephone 102 or is to be announced via that telephone's speakerphone 104. Indication 123 is illustratively administratively programmed into table 122 to reflect the wishes of the user of the corresponding telephone 102. Further according to the invention, stored programs in memory 110 include a speakerphone activation program 120 that is executed whenever switch 100 has information, such as a caller ID, to display on a display of a telephone 102. The functionality of program 120 is shown in FIG. 2.

As was mentioned above, execution of program 120 is initiated when switch 100 has information (e.g., a caller ID of a call incoming for telephone x), to display on display 103 of a telephone 102 (telephone x), at step 200. In response) program 120 checks indications 123 in translations table 122 to determine if announcement of display information is activated for telephone x, at step 202. In the meantime, switch 100 may also conventionally ring telephone x. If announcement display is not activated, execution of program 120 ends and switch 100 proceeds conventionally, at step 204, to display the information on display 103 of telephone x. If announcement of display information is activated for telephone x, as determined at step 202, processor 112 under control of program 120 activates speaker 106 of speakerphone 104 of telephone x, at step 206. Illustratively, processor 112 causes the entire speakerphone 104 to be activated, but pays no attention to the input from the microphone of that speakerphone 104, thereby effectively activating speaker 106 only. Processor 112 under control of program 120 then connects TTS 114 to telephone line 115 of telephone x, at step 208, and causes TTS 114 to voice the display information, i.e., to convert the display information into speech, at step 210, whereby the converted information travels to speaker 106 over line 115 and is played out by speaker 106 to the user of telephone x. In the case of the display information being a caller ID, processor 112 also checks at this time whether telephone x has answered, redirected, or terminated the incoming call, e.g., whether telephone x has gone off-hook, at step 212. If not, processor 112 causes TTS 114 to repeat voicing of the display information at step 210. When telephone x does signal a response to the incoming call, as determined at step 212, processor 112 causes TTS 114 to cease voicing the display information, at step 214, and deactivates speakerphone 104 of telephone x, at step 216. Execution of program 120 then ends and switch 100 proceeds conventionally, at step 218, e.g., by connecting the incoming call to telephone x.

Of course, various changes and modifications to the illustrative embodiment described above may be envisioned. For example, not only caller ID information, but any information may be announced via the telephones' speakerphones. Illustratively, the same announcement may be made simultaneously via a plurality of the speakerphones, causing the system to act as a public announcement system. Or, the invention may be used to guide users through the many switch-based features that users often do not readily know how to use (unless they have received training or documentation of some sort). For example, many people do not know how to set up a conference call, add a number to their personal directory, and so on. A PBX that has a text-to-speech converter and the ability to activate a speakerphone automatically could guide users through these procedures. To illustrate, if a user has an active call and presses CONF, a voice on the speakerphone would prompt the user to, "Dial the number of the person you wish to add, then press Conference again." Such changes and modifications can be made without departing from the spirit and the scope of the invention and without diminishing its attendant advantages. It is therefore intended that such changes and modifications be covered by the following claims except insofar as limited by the prior art.

## Claims

1. A method of using a speakerphone comprises:
in response to receiving a communication from a source for a destination that has a user telecommunications terminal (102) and a speakerphone (104), a communications switch (100) activating (206) the speakerphone; and
further in said response, the communications switch announcing (210) identity of the source through the activated speakerphone.

2. The method of claim 1 further comprising:
further in said response, the communications switch connecting (218) the communication to the user telecommunications terminal.

3. The method of claim 1 wherein:
announcing comprises
repeatedly announcing (210, 212) the identity of the source through the activated speakerphone until receipt (212) by the communications switch of a signal from the telecommunications terminal.

4. The method of claim 3 wherein:
the signal comprises at least one of accepting the communication, redirecting the communication, and terminating the communication at the user telecommunications terminal, or the telecommunications terminal going off-hook.

5. The method of claim 1 further comprising:
in said response, determining (202) first whether the announcing is activated for the destination;
in response to determining that the announcing is not activated for the destination, the switching system indicating (204) the identity of the source through the terminal; and
in response to determining that the announcing is activated for the destination, effecting said activating and said announcing.

6. The method of claim 1 wherein:
activating comprises
determining (202) at the communications switch whether announcing of display information is activated for the destination,
in response to determining that the announcing is activated, the communications switch activating (206) the speakerphone, and
at least in response to determining that the announcing is not activated, the communications switch causing (206) the display information to be displayed on a display (103) of the terminal; and
announcing comprises
in response to determining that the announcing is activated, the communications switch announcing (210) the display information through the activated speakerphone.

7. The method of claim 6 wherein:
announcing comprises
converting (208, 210) the display information into speech signals; and
causing (210) the speakerphone to play out the speech signals.

8. The method of claim 6 wherein:
activating comprises
activating speakerphones (106) of a plurality of destinations that each have a user telecommunications terminal (102) and a speakerphone; and
announcing comprises
announcing (210) the display information simultaneously through the plurality of activated speakerphones.

9. The method of claim 1 or 6 further comprising:
in response to receipt by the communications switch of a signal from the telecommunications terminal, ceasing (214) said announcing and deactivating (216) the speakerphone.

10. A communications switch (100) adapted to perform the method of one of claims 1-9.
